# EUROPÄISCHE PATENTANMELDUNG

(11) **EP 4 300 783 A1**
(43) Veröffentlichungstag der Anmeldung: **03.01.2024**
(21) Anmeldenummer: 23177283.1
(22) Anmeldetag: 05.06.2023
(51) Int. Cl.: H02K 3/34, H02K 15/10, H02K 15/06

(54) **HERSTELLUNGSVERFAHREN EINES STATORS EINER ROTIERENDEN ELEKTRISCHEN MASCHINE MIT NUTGRUNDISOALTION**

(30) Priorität: 29.06.2022 DE 102022206621
(71) Anmelder: Siemens Mobility GmbH, 81739 München (DE)
(72) Erfinder: Safa, Bülent, 91207 Lauf (DE); Sträussl, Günter, 91154 Roth (DE); Waffler, Harald, 90537 Feucht (DE); Wendt, Jan, 90489 Nürnberg (DE)
(74) Vertreter: Siemens Patent Attorneys

(57) **Zusammenfassung**

Verfahren zum Herstellen eines äusseren Stators einer elektrischen, rotierenden Maschine, mit zumindest folgenden Schritten: -Bereitstellen eines ringförmigen Statorkerns mit einer Vielzahl von Statorzähnen und Statornuten am Innenumfang, wobei die Statornuten jeweils einen rechteckigen Querschnitt mit einem Nutgrund, parallelen Nutwänden und einer Nutöffnung aufweisen, -Bereitstellen zumindest einer Nutisolation, wobei die Nutisolation eine Länge in axialer Richtung aufweist, welche zumindest einer Länge der Statornuten entspricht, und eine Breite in Umfangsrichtung aufweist, welche die Mehrzahl Statorzähne und -nuten umfasst, wobei ist die Nutisolation in eine Mehrzahl von Segmentabschnitten mit einer bestimmten Breite unterteilt, und wobei benachbarte Segmente durch jeweils eine Falzlinie getrennt sind, -Einlegen der Nutisolation in den Statorkern, -Einbringen von Spulenseiten von Formspulen zumindest einer Statorwicklung über die Nutöffnungen in die Statornuten, -Auftrennen von Falzlinien oder Segmenten, die die sich am Innenumfang des Statorkerns befinden, und -Übereinanderlegen von Segmentenden in der jeweiligen Nutöffnung.

## Beschreibung

Die Erfindung betrifft ein Verfahren zum Herstellen eines Stators einer elektrischen rotierenden Maschine, eine Nutisolation, eine Verwendung einer Nutisolation sowie eine elektrisch rotierende Maschine.

Elektrische rotierende Maschinen mit einer Nennleistung von mehreren hundert bis über eintausend Kilowatt werden insbesondere als Antriebs- bzw. Traktionsmotoren in Schienenfahrzeugen wie Triebzügen für den Regional- und Fernverkehr sowie Lokomotiven eingesetzt. Solche Maschinen bestehen üblicherweise aus einem Stator mit einem ringförmigen Statorkern und einem in diesem um eine Rotationsachse drehbar angeordneten Rotor. Der Stator besteht dabei üblicherweise aus einer Vielzahl dünner Elektrobleche, die zu einem Blechpaket verspannt werden. Dieses Blechpaket bildet den magnetisch leitfähigen Grundkörper der Maschine. An der radialen Innenseite des Stators ist eine Mehrzahl Statorzähne ausgebildet, die eine entsprechende Mehrzahl Statornuten ausbilden und einen kreiszylindrischen Statorinnenraum begrenzen. Die Statornuten weisen einen über die Länge des Stators einheitlichen rechteckigen Querschnitt auf und sind bezüglich des Statorinnenraums offen. In die Statornuten werden über Nutöffnungen Spulenseiten einer oder mehrerer Statorwicklungen eingebracht.

Eine Spule besteht aus einer oder mehreren Windungen, wobei jede Windung wiederum aus einem oder mehreren parallel geschalteten Drähten, insbesondere Flachdrähten bzw. Rechteckdrähten, besteht. Jede Windung weist zwei Windungsseiten entsprechend einem Hin- und einem Rückleiter auf, welche in zwei unterschiedlichen Statornuten angeordnet sind. Sofern eine Spule mehrere Windungen umfasst, sind diese innerhalb der Spule elektrisch in Serie geschaltet.

Entsprechend der Windung bzw. den mehreren Windungen weist auch die Spule zwei Spulenseiten auf, welche in unterschiedliche Statornuten eingebracht werden. Außerhalb der Statornuten werden die beiden Spulenseiten der Spule über Spulenköpfe miteinander verbunden, wobei im Bereich eines Spulenkopfes ergänzend ein Spulenanschluss vorgesehen ist. Vorzugsweise werden Spulenseiten von zwei Spulen in einer jeweilige Statornut in radialer Richtung übereinanderliegend angeordnet, wobei eine Spulenseite der einen Spule, die so genannte Unterschicht bzw. der so genannte Unterstab, im Bereich des Nutgrunds der Statornut angeordnet ist, während eine Spulenseite der anderen Spule, die so genannte Oberschicht bzw. der so genannte Oberstab, im Bereich der Nutöffnung der Statornut angeordnet ist. Eine Anordnung der beiden Spulenseiten einer Spule in unterschiedlichen Statornuten wird auch als verteilte Wicklung bezeichnet. Eine entsprechend dem gewünschten Nutsprung, also dem räumlichen Abstand der Statornuten, dreidimensional geformte Spule wird auch als Formspule bezeichnet.

Für eine elektrische Isolierung gegenüber dem Statorkern weist die Spule eine Spulenisolation auf. Diese besteht beispielsweise aus einer oder mehreren Lagen eines Glimmerbands sowie einer oder mehreren Lagen eines Gewebebands, mit denen zumindest die Spulenseiten vor dem Einbringen der Spule in die Statornuten umwickelt werden. Die Glimmer- und Gewebebänder dienen dabei neben der elektrischen Isolierung ergänzend insbesondere einer Nässeresistenz, der Erzielung einer bestimmten Wärmeklasse sowie einem mechanischen Schutz der Spule.

Ergänzend werden die Statornuten mit einer jeweiligen Nutisolation ausgekleidet, bevor die mit der Spulenisolation umwickelten Spulenseiten in diese eingebracht werden. Die Nutisolation dient dabei einer ergänzenden elektrischen Isolierung der Spule bzw. der Spulenseite gegenüber dem Stator. Üblicherweise dient ein Streifen eines Aramid Papiers als Nutisolation, wobei das Aramid Papier beispielsweise entsprechend der Norm IEC 60819-3-3:2011 ausgeführt ist. Der für eine jeweiligen Statornut verwendete Nutisolationsstreifen ist dabei derart bemessen, dass dieser den Nutgrund und die Nutwände vollständige auskleidet und sowohl in axialer Richtung über die jeweilige Stirnseite des Stators hinausragt als auch in radialer Richtung in den Statorinnenraum hineinragt. Dabei kann der Nutisolationsstreifen über die Breite an bestimmten Stellen Falzlinien aufweisen, um dessen Form dem rechteckigen Querschnitt der Statornut anzupassen.

Bei der Herstellung des Stators werden von einer Montagefachkraft zunächst alle Nutisolationsstreifen in die Statornuten eingelegt. Anschließend werden die Spulenseiten von der Montagefachkraft in die Statornuten eingebracht. Die aus der Nutöffnung in den Statorinnenraum ragenden Enden der jeweiligen Nutisolation werden nachfolgend übereinandergelegt, sodass die Spulenseite bzw. die Spulenseiten innerhalb der jeweiligen Statornut vollständig von dem Nutisolationsstreifen umschlossen ist bzw. sind. Die Enden der Nutisolation sollten sich dabei deutlich überlappen, um eine bestimmte Strecke für eventuell auftretende Kriechströme von der Spule zum Statorkern zu gewährleisten. Die Enden der Nutisolationen werden vor dem Einlegen in die Statornuten mit einem jeweiligen Schutzstreifen versehen, um einer möglichen Verletzung der Montagefachkraft vorzubeugen. Diese Schutzstreifen werden vor dem Übereinanderlegen der Enden wieder entfernt. Die Nutöffnungen der Statornuten werden schließlich von der Fachkraft mit einem jeweiligen Nutverschlusselement, beispielsweise einem Nutversschlussstreifen aus einem Glasfasermaterial, welches bzw. welcher in speziellen Nuten der Nutwände der Statornut geführt wird, verschlossen. Abschließend, nach vollständigem Einbringen aller Spulen bzw. Spulenseiten in die Statornuten des Statorkerns und Verschließen der Nutöffnungen, werden der Statorkern und die Spulen für einen ergänzenden Schutz vor insbesondere mechanischer Beschädigung und Eindringen von Feuchtigkeit mit einem Harz getränkt bzw. vergossen.

Wie vorstehend beschrieben, werden wesentliche Tätigkeiten bei der Herstellung des Stators einer elektrisch rotierenden Maschine wie beispielsweise einem Traktionsmotor für ein Schienenfahrzeug derzeit manuell durch eine Montagefachkraft durchgeführt. Dieser hohe manuelle Fertigungs- und damit verbundene Zeitaufwand stellen einen wesentlichen Kostenfaktor der elektrischen Maschinen dar.

Aufgabe der Erfindung ist es, ein Verfahren anzugeben, welches den Anteil manueller Arbeit bei der Herstellung eines Stators einer elektrisch rotierenden Maschine verringert. Gelöst wird diese Aufgabe durch die jeweiligen Merkmale der unabhängigen Patentansprüche bezüglich eines Verfahrens, einer Nutisolation und einer elektrisch rotierenden Maschine. Weiterbildungen der Aspekte sind in jeweiligen abhängigen Patentansprüchen angegeben.

Ein erster Aspekt der Erfindung betrifft ein Verfahren zum Herstellen eines Stators einer elektrischen rotierenden Maschine, mit zumindest den Schritten Bereitstellen eines ringförmigen Statorkerns, wobei der Statorkern an seiner radialen Innenseite eine Mehrzahl Statorzähne aufweist, welche eine entsprechende Mehrzahl Statornuten ausbilden, wobei Nutöffnungen der Statornuten und Statorzahnköpfe der Statorzähne einen kreiszylindrischen Statorinnenraum begrenzen, in welchem ein um eine Rotationsachse drehender Rotor der Maschine anordenbar ist, und wobei die Statornuten jeweils einen rechteckigen Querschnitt mit einem Nutgrund, parallelen Nutwänden und einer Nutöffnung aufweisen, Bereitstellen zumindest einer Nutisolation, wobei die Nutisolation eine Länge in axialer Richtung aufweist, welche zumindest einer Länge der Statornuten entspricht, und eine Breite in Umfangrichtung des Statorkerns aufweist, welche eine Mehrzahl Statornuten umfasst, und wobei die Nutisolation in eine Mehrzahl Segmente mit einer jeweiligen Segmentbreite unterteilt ist, wobei benachbarte Segmente durch eine jeweilige Falzlinie getrennt sind, Einlegen der Nutisolation in den Statorkern, Einbringen von Spulenseiten von Formspulen zumindest einer Statorwicklung über die Nutöffnungen in die Statornuten, Auftrennen von Segmenten und Übereinanderlegen von Segmentenden im Bereich der jeweiligen Nutöffnung.

Durch die Verwendung einer Nutisolation, die im Unterschied zu den einleitend beschriebenen und bislang verwendeten Nutisolationsstreifen mehrere Statornuten umfasst, kann der Anteil manueller Arbeit vorteilhaft verringert werden, indem insbesondere von dem Anbringen und späteren Entfernen von Schutzstreifen an den jeweiligen Enden der Nutisolationsstreifen weitgehend abgesehen werden kann.

Die Nutisolation umfasst dabei eine größere Anzahl über den Umfang des Statorkern betrachtet benachbarter Statornuten. Diese Anzahl kann bei einem typischen Traktionsmotor für ein Schienenfahrzeug beispielsweise zumindest acht betragen, wobei bei einer Gesamtzahl Statornuten von achtundvierzig entsprechend sechs Nutisolationen verwendet werden. Vorzugsweise wird jedoch eine einzige Nutisolation, die alle Statornuten des Statorkerns umfasst, verwendet.

Im Unterschied zu den einleitend beschriebenen Nutisolationsstreifen weist die Nutisolation somit zunächst, d.h. vor dem Schritt des Auftrennens, lediglich zwei Segmentenden auf, welche der ersten und der letzten der von der Nutisolation umfassten Mehrzahl Statornuten zugeordnet sind. Als Segmentende wird dabei zumindest der Teil der Breite eines Segments bezeichnet, welcher über die Nutöffnung hinaus in den Statorinnenraum hineinragt bzw. welcher nicht einer Isolierung der Spulenseiten gegenüber der Nutwand innerhalb der Statornut dient. Vorteilhaft sind hierdurch, sofern erforderlich, ausschließlich diese Segmentenden, bei einer alle Statornuten des Statorkerns umfassenden Nutisolation lediglich zwei Segmentenden, mit einem zusätzlichen Schutzstreifen zu versehen. Durch das Auftrennen von Segmenten nach oder während des Einbringens der Spulenseiten werden weitere Segmentenden gebildet, die entsprechend der einleitenden Beschreibung im Bereich der Nutöffnung bzw. im radial oberen Bereich der Statornut sich überlappend übereinandergelegt werden. Anschließend werden, entsprechend der einleitenden Beschreibung, die Statornuten beispielsweise wiederum mit einem Nutverschlusselement verschlossen.

Die Nutisolation in Segmente einer jeweiligen Segmentbreite trennenden Falzlinien geben dabei eine bestimmte Form vor, die ein einfaches und zuverlässiges Einlegen der Nutisolation in die Statornuten gewährleisten. Eine Falzlinien stellt dabei eine mittels eines geeigneten Werkzeugs erzeugte Knickkante dar, welche sich über die wesentliche oder vorzugsweise die gesamte Länge der Nutisolation erstreckt. Bevorzugt wird die Nutisolation ausgehend von dem Statorinnenraum in radialer Richtung in die Statornuten eingelegt. Alternativ ist jedoch ebenso ein Einlegen ausgehend von einer Stirnseite des Statorkerns in axialer Richtung möglich, dies insbesondere, wenn die Nutisolation eine begrenzte Anzahl Statornuten, beispielsweise die vorstehend genannten acht Statornuten, umfasst.

Die Statornuten weisen jeweils einen rechteckigen Querschnitt auf und sind zum Statorinnenraum hin offen ausgeführt. Dies ermöglicht einerseits das Einbringen der Spulenseiten ausgehend von dem Statorinnenraum in radialer Richtung in die Statornuten. Andererseits gewährt ein rechteckiger Querschnitt insbesondere bei Formspulen mit starren Spulenseiten einen hohen Füllgrad der Statornuten.

Das erfindungsgemäße Verfahren ist besonders geeignet in Verbindung mit einem der Verfahren der nachveröffentlichten deutschen Patentanmeldungen DE 10 2021 200 839.9, DE 10 2021 200 843.7, DE 10 2021 200 841.0 und DE 10 2021 200 844.5 bezüglich jeweils eines automatisierten Einbringens von Spulenseiten in Statornuten und Formen der Spulen. Mittels der darin beschriebenen Verfahren und Werkzeuge können die Spulenseiten automatisiert in die mit einer erfindungsgemäßen Nutisolation ausgekleideten Statornuten eingebracht werden, wodurch der Aufwand für die Herstellung eines Stators weiter vorteilhaft verringert wird.

Nach einer ersten Weiterbildung des Verfahrens weisen die Segmente eine jeweils gleiche Segmentbreite auf und werden die Falzlinien in dem Schritt des Einlegens der Nutisolation jeweils im Bereich eines Statorzahnkopfes angeordnet.

In dem Schritt des Einlegens der Nutisolation werden die Falzlinien vorzugsweise jeweils mittig und in einem Abstand radial oberhalb eines jeweiligen Statorzahnkopfes angeordnet. Der Bereich, in dem die Falzlinie angeordnet wird, bezieht sich sowohl auf die Breite des Statorzahns in Umfangrichtung des Statorkerns als auch auf einen radialen Abstand zum Statorzahnkopf. Die dem Statorzahnkopf zugewandte Falzlinie bzw. deren Knickkante bildet vorzugsweise einen rechten bzw. einen leicht spitzen oder leicht stumpfen Winkel, insbesondere einen Winkel zwischen 80° und 100°. Die von der jeweiligen Falzlinie ausgehenden Segmente werden jeweils über eine Seite des Statorzahnkopfes in die angrenzende Statornut, vorzugsweise bis in den Bereich deren Nutgrunds, und aus dieser heraus über den benachbarten Statorzahnkopf zu der wiederum mittig oberhalb dieses benachbarten Statorzahnkopfes angeordneten nächsten Falzlinie geführt. Hierdurch entsteht über den inneren Umfang des Statorkerns betrachtet eine wellenförmige Struktur der Nutisolation bzw. der mehreren Nutisolationen mit dachförmigen Erhebungen oberhalb der Statorzahnköpfe und bogenförmigen Tälern in den Statornuten.

In dem Schritt des Einbringens der Spulenseiten in die Statornuten werden Spulenseiten der Spulen, manuell oder automatisiert, bis in den Nutgrund einer jeweiligen Statornut eingebracht. Aufgrund des größeren Umfangs des üblicherweise nahezu rechteckigen Querschnitts der Spulenseite im Vergleich zu der bogenförmig in die Statornut eingelegten Nutisolation wird die Nutisolation während des Einbringens der Spulenseite weiter in die Statornuten und bis in den Nutgrund hineingezogen, wodurch Teile des zunächst oberhalb der beiden benachbarten Statorzahnköpfe der Statornut angeordneten Segments der Nutisolation ebenfalls in die Statornut hineingezogen werden und der radiale Abstand der Falzlinien zu dem jeweiligen Statorzahnkopf verringert wird.

Nachfolgend wird die Nutisolation in dem Schritt des Auftrennens an jeweils einer oder mehreren Stellen des oberhalb der Statorzahnköpfe angeordneten Teils der Segmente aufgetrennt. Durch die Auftrennung entstehen Segmentenden mit einer jeweiligen Breite, wobei die Breite derart bemessen ist, dass die überlappenden Segmentenden nach dem Übereinanderlegen in der Statornut eine ausreichende Strecke für möglichen Kriechstrom bilden. Das Auftrennen der Nutisolation erfolgt mittels eines geeigneten Schneidwerkzeugs, beispielsweise mittels eines Messers, einer Schere oder eines Laserstrahls.

Vorzugsweise wird die Nutisolation jedoch entlang der jeweiligen Falzlinie aufgetrennt. Hierfür wird die Segmentbreite derart bemessen, dass nach dem Auftrennen der Falzlinien jeweils Segmentenden entstehen, die nach dem Übereinanderlegen in der Statornut wiederum eine ausreichende Kriechstrecke ausbilden. Ferner ermöglicht eine nach Einbringen der Spulenseiten noch bestehende dachförmige Erhebung der Falzlinie oberhalb des Statorzahnkopfes ein einfaches und verlässliches Auftrennen.

Nach einer auf der ersten Weiterbildung basierenden zweiten Weiterbildung des Verfahrens sind die Falzlinien mit einer jeweiligen Perforationslinie über zumindest eine Teillänge der Nutisolation versehen, sodass die Nutisolation in dem oder im Anschluss an den Schritt des Einbringens der Spulenseiten jeweils im Bereich der Perforationslinie aufgetrennt wird.

Das Material der Nutisolation, beispielsweise das einleitend genannte Aramid, weist eine hohe Reißfestigkeit auf, weshalb, wie vorstehend zu der ersten Weiterbildung ausgeführt, im Anschluss an den Schritt des Einbringens der Spulenseiten ein ergänzendes manuelles oder automatisiertes Auftrennen der Nutisolation mittels eines Schneidwerkzeugs erforderlich ist. Nach der zweiten Weiterbildung wird das Material mittels einer sich vorzugsweise über zumindest eine wesentliche Länge der Falzlinie erstreckenden bzw. eine mit der Falzlinie identischen Perforationslinie derart geschwächt, dass die während des Einbringens der Spulenseiten auf die Perforationslinie wirkende Zugbelastung zu einem Auftrennen bzw. einem Reißen der Nutisolation entlang der Perforationslinie führt. Vorteilhaft ist hierdurch kein auf den Schritt des Einbringens der Spulenseiten folgender gesonderter, gegebenenfalls manuell von einer Montagefachkraft auszuführender, Schritt des Auftrennens erforderlich. Vielmehr werden diese Schritte parallel bzw. wird der Schritt des Auftrennens als Teilschritt des Schritts des Einbringens ausgeführt, wodurch die für die Herstellung des Stators erforderliche Zeit vorteilhaft verkürzt wird. Sofern die auf die Perforationslinie wirkende Zugbelastung nicht ausreichend ist bzw. eine ausreichende Zugbelastung aufgrund der Ausgestaltung der Nutisolation nicht erzielt werden kann, wird mittels der Perforationslinie der an den Schritt des Einbringens der Spulenseiten anschließende Schritt des Auftrennens, insbesondere ein manuelles Auftrennen der Segmente, vorteilhaft erleichtert werden.

Die Perforation kann beispielsweise mittels eines Lasers erfolgen, welcher über die Länge der Perforationslinie in bestimmten Abständen Löcher oder Schlitze in das Material der Nutisolation schneidet. Die Anzahl und Ausmaße der Löcher bzw. Schlitze ist dabei derart bemessen, dass ein Reißen des Materials bei einer bestimmten Zugbelastung, welche während des Einbringens der Spulenseiten auftritt, gewährleistet wird. Ergänzend kann das Material in den Endbereichen der Länge der Perforationslinie über jeweils eine Teillänge bereits aufgetrennt sein, wodurch Sollrissstellen entstehen, die ein verlässliches Reißen bei der bestimmten Zugbelastung gewährleisten. Sowohl die Falzlinien als auch die Perforationslinie sowie gegebenenfalls aufgetrennte Teillängen sind bereits in der bereitgestellten Nutisolation vorgesehen, wobei das Perforieren der Perforationslinie vor oder nach dem Falzen der Falzlinien bzw., sofern Falzlinie und Perforationslinie übereinstimmen, gleichzeitig erfolgen kann. Eine entsprechende Perforation sowie bereits aufgetrennte Teillängen der Nutisolation können in gleicher Weise bei einem ergänzend erforderlichen Schritt des Auftrennens eine insbesondere manuelle Auftrennung der Segmente erleichtern.

Nach einer zu der ersten Weiterbildung alternativen dritten Weiterbildung des Verfahrens weisen die Segmente alternativ eine erste oder eine zweite Segmentbreite auf, wobei die erste Segmentbreite abhängig von einer Breite des Statorzahnkopfes bemessen ist, wobei erste Segmente und zweite Segmente abwechselnd angeordnet sind, wobei die ersten Segmente in dem Schritt des Einlegens der Nutisolation jeweils im Bereich eines Statorzahnkopfes angeordnet werden, und wobei die Falzlinien jeweils im Bereich eines Übergangs von dem Statorzahnkopf zu der Nutwand angeordnet werden.

Im Unterschied zu einer gleichen Segmentbreite aller Segmente der Nutisolation nach der ersten Weiterbildung weist die Nutisolation nach der dritten Weiterbildung abwechselnd bzw. alternierend angeordnete Segmente unterschiedlicher Segmentbreite auf. Die Segmentbreite der ersten Segmente, welche in dem Schritt des Einlegens der Nutisolation jeweils in dem Bereich bzw. radial oberhalb eines Statorzahnkopfes angeordnet werden, ist dabei derart bemessen, dass sie vorzugsweise der Breite des Statorzahnkopfes entspricht, sodass die Falzlinien jeweils im Bereich des Übergangs zu der Nutwand der benachbarten Statornut angeordnet sind. Vorteilhaft kann hierdurch ein nur geringer radialer Abstand der Nutisolation zu dem jeweiligen Statorzahnkopf nach dem Einlegen in den Statorkern erzielt werden. Dies ermöglicht bzw. erleichtert insbesondere die Verwendung eines Werkzeugs, wie es in den vorstehend bereits genannten nachveröffentlichten deutschen Patentanmeldungen DE 10 2021 200 839.9, DE 10 2021 200 843.7, DE 10 2021 200 841.0 und DE 10 2021 200 844.5 jeweils offenbart ist. Die Segmentbreite der zweiten Segmente ist hingegen vorzugsweise derart bemessen, dass die eingebrachte Spulenseite bzw. die eingebrachten Spulenseiten zusammen mit den Segmentenden vollständig umschlossen werden kann bzw. können.

Die Nutisolation wird entsprechend der vorstehenden Beschreibung zu der ersten Weiterbildung in dem Schritt des Auftrennens an jeweils einer oder mehreren Stellen des oberhalb der Statorzahnköpfe angeordneten ersten Segments aufgetrennt. Durch die Auftrennung entstehen wiederum Segmentenden mit einer jeweiligen Breite, wobei die Breite derart bemessen ist, dass die überlappenden Segmentenden nach dem Übereinanderlegen in der Statornut eine ausreichende Strecke für möglichen Kriechstrom bilden. Vorzugsweise werden die ersten Segmente jeweils symmetrisch mittig aufgetrennt, sodass jeweils eine halbe erste Segmentbreite ein Segmentende bildet und die Spulenseite bzw. die Spulenseiten in der Statornut von einem zweiten Segment sowie zwei jeweils halben ersten Segmenten umschlossen ist. Alternativ können die ersten Segmente in gleicher Weise asymmetrisch aufgetrennt werden, sodass jeweils Segmentenden unterschiedlicher Breite entstehen. Das Auftrennen der Nutisolation erfolgt wiederum mittels eines geeigneten Schneidwerkzeugs, beispielsweise mittels eines Messers, einer Schere oder eines Laserstrahls. Vorzugsweise sind die beiden äußeren Segmente der Nutisolation bei der Bereitstellung bereits als Segmentenden ausgestaltet bzw. weisen eine entsprechende Breite eines Segmentendes auf, wobei die äußeren Segmente alternativ auch zunächst als ein jeweiliges erstes Segment ausgestaltet sein können, welches entsprechend den weiteren ersten Segmenten nachfolgend aufgetrennt wird und ein jeweiliges Segmentende bildet, während der abgetrennte Teil entfernt wird.

Nach einer auf der dritten Weiterbildung basierenden vierten Weiterbildung sind die ersten Segmente jeweils mit einer Perforationslinie über zumindest eine Teillänge der Nutisolation versehen, sodass die Nutisolation in dem oder im Anschluss an den Schritt des Einbringens der Spulenseiten jeweils im Bereich der Perforationslinie aufgetrennt wird.

Durch die mittels der Perforationslinien erzielte Schwächung des Materials der Nutisolation führt die während des Einbringens der Spulenseiten auf die Perforationslinie wirkende Zugbelastung vorzugsweise zu einem Auftrennen bzw. einem Reißen der Nutisolation entlang der Perforationslinie. Der Schritt des Auftrennens der Segmente bzw. speziell der mit einer jeweiligen Perforationslinie versehenen ersten Segmente der Nutisolation kann somit parallel zu dem Schritt des Einbringens der Spulenseiten ausgeführt werden, wodurch die Herstellungszeit für den Stator gegenüber einem gesonderten Schritt für ein manuelles oder automatisiertes Auftrennen im Anschluss an den Schritt des Einbringen vorteilhaft verkürzt wird. Sofern wiederum die auf die Perforationslinie wirkende Zugbelastung nicht ausreichend ist bzw. eine ausreichende Zugbelastung aufgrund der Ausgestaltung der Nutisolation nicht erreicht werden kann, um ein Auftrennen bzw. Reißen der Nutisolation bereits während des Schritts des Einbringens der Spulenseiten zu erzielen, wird mittels der Perforationslinie der dann erforderliche anschließende Schritt des Auftrennens, insbesondere ein manuelles Auftrennen der Segmente, vorteilhaft erleichtert.

Die Perforation entlang der Perforationslinie erfolgt beispielsweise mittels eines Lasers, welcher über die Länge der Perforationslinie in bestimmten Abständen Löcher oder Schlitze in das Material der Nutisolation schneidet. Eine geeignete Anzahl sowie geeignete Ausmaße der Löcher bzw. Schlitze gewährleisten dabei ein Reißen des Materials bei einer während des Einbringens der Spulenseiten auftretenden bestimmten Zugbelastung. Ergänzend kann das Material in den Endbereichen der Länge der Perforationslinie über jeweils eine Teillänge bereits aufgetrennt sein, wodurch Sollrissstellen entstehen, die ein verlässliches Reißen bei der bestimmten Zugbelastung gewährleisten. Eine entsprechende Perforation sowie bereits aufgetrennte Teillängen der Nutisolation können in gleicher Weise bei einem erforderlichen ergänzenden Schritt des Auftrennens eine insbesondere manuelle Auftrennung der Segmente erleichtern. Die Perforationslinien sowie gegebenenfalls aufgetrennte Teillängen sind vorzugsweise in der bereitgestellten Nutisolation bereits vorgesehen.

Nach einer zu der ersten und der dritten Weiterbildung alternativen fünften Weiterbildung weisen die Segmente alternativ eine erste, eine zweite oder eine dritte Segmentbreite auf, wobei die erste Segmentbreite abhängig von einer Breite des Statorzahnkopfes, die zweite Segmentbreite abhängig von einer Höhe der Nutwand und die dritte Segmentbreite abhängig von einer Breite des Nutgrunds bemessen sind, wobei dritte Segmente und erste Segmente jeweils zwischen zwei zweiten Segmenten angeordnet sind, und wobei in dem Schritt des Einlegens der Nutisolation die Falzlinien zwischen den ersten und zweiten Segmenten jeweils im Bereich eines Übergangs von dem Statorzahnkopf zu der Nutwand und weitere Falzlinien zwischen dritten und zweiten Segmenten jeweils im Bereich eines Übergangs von dem Nutgrund zu der Nutwand angeordnet werden.

Mittels der Falzlinien und weiteren Falzlinien, welche jeweils Knickkanten bilden, kann die Struktur der Nutisolation weitgehend der Geometrie der Statorzähne und Statornuten angepasst werden, sodass die Nutisolation einerseits in verlässlicher Weise in den Statorkern eingelegt werden kann, andererseits nach dem Schritt des Einlegens einen nur geringen radialen Abstand zu der jeweils benachbarten Fläche des Statorkerns aufweist bzw. direkt an dieser anliegt. Dies ermöglicht wiederum insbesondere die Verwendung eines Werkzeugs, wie es in den vorstehend genannten nachveröffentlichten deutschen Patentanmeldungen DE 10 2021 200 839.9, DE 10 2021 200 843.7, DE 10 2021 200 841.0 und DE 10 2021 200 844.5 jeweils offenbart ist.

Im Unterschied zu der zweiten und vier der vierten Weiterbildung ist das Versehen der Nutisolation bzw. der ersten Segmente mit einer oder mehreren Perforationslinien grundsätzlich nicht dafür geeignet, mit dem Einbringen der Spulenseiten ein paralleles Auftrennen der ersten Segmente an solchen Perforationslinien zu erzielen, da das Einbringen der Spulenseiten in die Statornuten zu keiner bzw. einer nicht ausreichenden Zugbeanspruchung des Materials führt. So wird der Schritt des Auftrennens vorzugsweise im Anschluss an den Schritt des Einbringens der Spulenseiten ausgeführt, wobei die ersten Segmente wiederum mit einem geeigneten Schneidwerkzeug über die Länge der Nutisolation aufgetrennt werden. Die ersten Segmente können jedoch trotzdem mit einer oder mehreren jeweiligen Perforationslinien sowie gegebenenfalls Sollrissstellen in den Endbereichen der Länge dieser Perforationslinien versehen werden, um ein einfaches und verlässliches Auftrennen zu gewährleisten.

Sowohl die Falzlinien, die weiteren Falzlinien als auch gegebenenfalls vorgesehene Perforationslinien sowie Sollrissstellen sind vorzugsweise in der bereitgestellten Nutisolation bereits vorgesehen. Ferner sind vorzugsweise die beiden äußeren Segmente der Nutisolation bei der Bereitstellung bereits als an ein jeweiliges zweites Segment angrenzende Segmentenden ausgestaltet bzw. weisen eine entsprechende Breite eines Segmentendes auf, wobei die äußeren Segmente alternativ auch zunächst als ein jeweiliges erstes Segment ausgestaltet sein können, welches entsprechend den weiteren ersten Segmenten nachfolgend aufgetrennt wird und ein jeweiliges Segmentende bildet, während der abgetrennte Teil entfernt wird.

Ein zweiter Aspekt der Erfindung betrifft Nutisolation für einen Statorkern eines Stators einer elektrischen rotierenden Maschine, wobei der Statorkern an seiner radialen Innenseite eine Mehrzahl Statorzähne aufweist, welche eine entsprechende Mehrzahl Statornuten ausbilden, wobei Nutöffnungen der Statornuten und Statorzahnköpfe der Statorzähne einen kreiszylindrischen Statorinnenraum begrenzen, und wobei die Statornuten jeweils einen rechteckigen Querschnitt mit einem Nutgrund, parallelen Nutwänden und einer Nutöffnung zum Statorinnenraum aufweisen, und wobei die Nutisolation eine Länge in axialer Richtung, welche zumindest einer Länge der Statornuten des ringförmigen Statorkerns entspricht, und eine Breite, welche eine Mehrzahl Statornuten umfasst, aufweist, und wobei die Nutisolation in eine Mehrzahl Segmente mit einer jeweiligen Segmentbreite unterteilt ist, wobei benachbarte Segmente durch eine jeweilige Falzlinie getrennt sind.

Nach einer ersten Weiterbildung der Nutisolation sind die Falzlinien derart angeordnet, dass die Segmente eine jeweils gleiche Segmentbreite aufweisen, oder dass die Segmente alternativ eine erste oder eine zweite Segmentbreite aufweisen, wobei die erste Segmentbreite abhängig von einer Breite des Statorzahnkopfes bemessen ist, wobei erste Segmente und zweite Segmente abwechselnd angeordnet sind, oder dass die Segmente alternativ eine erste, eine zweite oder eine dritte Segmentbreite aufweisen, wobei die erste Segmentbreite abhängig von einer Breite des Statorzahnkopfes, die zweite Segmentbreite abhängig von einer Höhe der Nutwand und die dritte Segmentbreite abhängig von einer Breite des Nutgrunds bemessen sind, und wobei dritte Segmente und erste Segmente jeweils zwischen zwei zweiten Segmenten angeordnet sind.

Ein dritter Aspekt der Erfindung betrifft eine Verwendung einer Nutisolation nach dem zweiten Aspekt für die Herstellung eines Stators einer elektrischen rotierenden Maschine, insbesondere eines Antriebsmotors eines Schienenfahrzeugs.

Ein vierter Aspekt der Erfindung betrifft eine elektrische rotierende Maschine, wobei die Maschine zumindest einen Stator und einen Rotor umfasst, wobei ein ringförmiger Statorkern des Stators an seiner radialen Innenseite eine Mehrzahl Statorzähne aufweist, welche eine entsprechende Mehrzahl Statornuten ausbilden, wobei Nutöffnungen der Statornuten und Statorzahnköpfe der Statorzähne einen kreiszylindrischen Statorinnenraum begrenzen, in welchem der um eine Rotationsachse drehende Rotor angeordnet ist, und wobei die Statornuten jeweils einen rechteckigen Querschnitt mit einem Nutgrund, parallelen Nutwänden und einer Nutöffnung zum Statorinnenraum aufweisen, und wobei der Stator nach einem Verfahren nach dem ersten Aspekt hergestellt wurde.

Nach einer Weiterbildung der elektrischen rotierenden Maschine ist die Maschine als ein Antriebsmotor eines Schienenfahrzeugs, insbesondere mit einer Nennleistung zwischen 100 kW und 1500 kW, ausgestaltet.

Nachfolgend wird die Erfindung anhand von Ausführungsbeispielen erläutert. Dabei zeigen:
- FIG 1: einen Statorkern mit einer eingelegten Nutisolation nach einer ersten Ausgestaltung,
- FIG 2: einen Ausschnitt des Statorkerns der FIG 1 mit eingelegter Nutisolation,
- FIG 3: einen Ausschnitt der Nutisolation der FIG 1 in einer Draufsicht,
- FIG 4: den Ausschnitt der FIG 2 mit eingebrachten Spulenseiten und aufgetrennter Nutisolation,
- FIG 5: den Ausschnitt der FIG 4 mit übereinandergelegten Segmentenden,
- FIG 6: einen Ausschnitt des Statorkerns der FIG 1 mit einer alternativen eingelegten Nutisolation,
- FIG 7: einen Ausschnitt der Nutisolation der FIG 6 in einer Draufsicht,
- FIG 8: einen Ausschnitt des Statorkerns der FIG 1 mit einer weiteren alternativen eingelegten Nutisolation,
- FIG 9: einen Ausschnitt der Nutisolation der FIG 8 in einer Draufsicht,
- FIG 10: einen Ausschnitt des Statorkerns der FIG 1 mit einer weiteren alternativen eingelegten Nutisolation,
- FIG 11: einen Ausschnitt der Nutisolation der FIG 10 in einer Draufsicht, und
- FIG 12: ein Schienenfahrzeug mit einem elektrischen Antriebssystem.

Aus Gründen der Übersichtlichkeit werden in den Figuren für gleiche bzw. gleich oder nahezu gleich wirkende Komponenten dieselben Bezugszeichen verwendet.

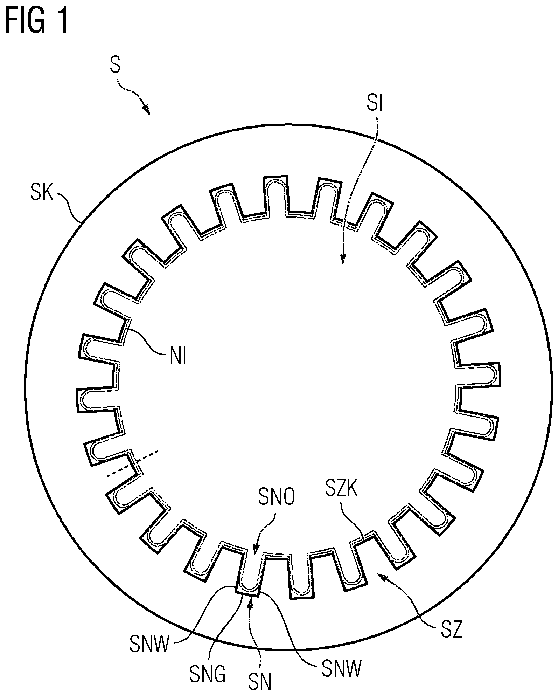

FIG 1 zeigt schematisch einen beispielhaften Querschnitt eines Statorkerns SK eines Stators S einer elektrischen rotierenden Maschine, wobei die Maschine insbesondere als Antriebsmotor AS eines Schienenfahrzeugs TZ einsetzbar ist. Der Statorkern SK besteht beispielsweise aus einem zylindrischen Grundkörper, der als ein Blechpaket aus einer Vielzahl zusammengefügter Elektrobleche ausgeführt ist. Der Statorkern SK kann neben den dargestellten, für die Erfindung wesentlichen, Merkmalen ergänzend weitere Merkmale wie beispielsweise über den äußeren Umfang angeordnete Kühlrippen oder den Statorkern SK durchdringende Kühlkanäle für eine fluidische Kühlung aufweisen. An der radialen Innenseite des Statorkerns SK sind über den inneren Umfang gleichmäßig verteilt vierundzwanzig Statorzähne SZ aus dem Material des Statorkerns SK ausgeformt, die eine entsprechende Anzahl Statornuten SN ausbilden. Die Statornuten SN weisen jeweils einen einheitlichen rechteckigen Querschnitt über die gesamte axiale Länge des Statorkerns SK auf, wobei die Statornuten SN jeweils durch eine Nutöffnung SNO, zwei Nutwände SNW und einen Nutgrund SNG begrenzt sind. Die Nutöffnungen SNO bilden zusammen mit den Statorzahnköpfen SZK einen kreiszylindrischen Statorinnenraum SI aus, in welchem ein Rotor der Maschine angeordnet wird.

Über die Nutöffnungen SNO werden jeweils eine oder mehrere Spulenseiten von Formspulen in die Statornuten SN eingebracht. In FIG 1 sind noch keine Spulenseiten in die Statornuten eingebracht, vielmehr ist ein Zustand während der Herstellung des Stators S vor dem Schritt des manuellen oder automatisierten Einbringens der Spulenseiten in die Statornuten SN dargestellt. Die Spulenseiten weisen typischerweise ebenfalls einen rechteckigen Querschnitt auf, wodurch ein hoher Füllgrad der Statornuten SN erzielt wird.

Für eine Isolierung des elektrisch leitfähigen Statorkerns SK gegenüber den Spulenseiten werden die Statornuten SN mit einer Nutisolation NI, beispielsweise einem Aramid Papier, vollständig ausgekleidet. Eine Länge der Nutisolation NI ist dabei derart bemessen, dass diese nach dem Einlegen eine axialer Länge der Statornuten SN des Statorkerns SK vollständig umfasst sowie ergänzend eine jeweilige Teillänge über die Stirnseiten des Statorkerns SK hinausragt. Nach dem Beispiel der FIG 1 ist der Statorkern SK mit einer einzigen Nutisolation NI ausgekleidet, die alle vierundzwanzig Statornuten SN des Statorkerns SK umfasst und nur im Bereich des mit einer gestrichelten Linie gekennzeichneten Statorzahns SZ aufgetrennt ist. Alternativ zu einer einzigen Nutisolation NI können beispielsweise auch drei Nutisolationen NI vorgesehen sein, die jeweils acht Statornuten SN umfassen. Eine Breite der Nutisolation NI ist entsprechend derart bemessen, dass im Anschluss an einen Schritt des Auftrennens der Nutisolation NI alle in die von dieser umfassten Statornuten SN eingebrachten Spulenseiten vollständig von der Nutisolation NI umschlossen werden können und dadurch eine elektrische Isolierung gegenüber dem Statorkern SK sicherstellen.

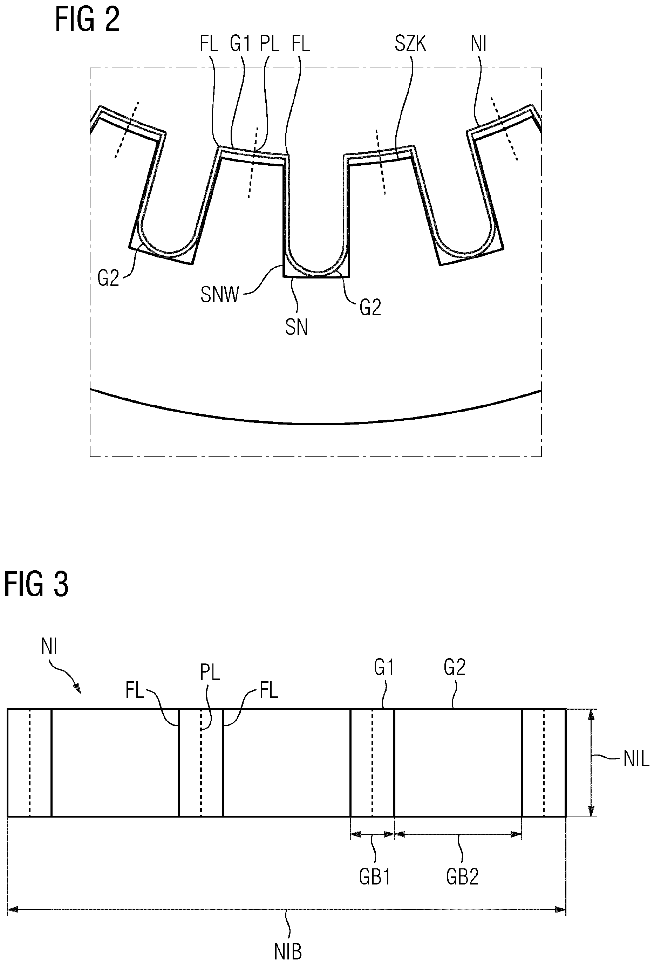

FIG 2 und 3 zeigen schematisch einen Ausschnitt des Querschnitts des Statorkerns SK der FIG 1 mit einer darin eingelegten bereitgestellten Nutisolation NI sowie eine Draufsicht dieser Nutisolation NI. Die Länge NIL der Nutisolation NI ist dabei verkürzt dargestellt, die tatsächliche Länge des Statorkerns SK und entsprechend auch der Nutisolation NI beträgt in der Praxis typischerweise ein Mehrfaches der dargestellten Länge. Auch die Breite NIB der Nutisolation NI ist verkürzt dargestellt, die tatsächliche Breite NIB kann ein Mehrfaches der Anzahl Statornuten SN des dargestellten Ausschnitts oder entsprechend der FIG 1 auch alle Statornuten SN des Statorkerns SK umfassen. Der Ausschnitt der FIG 2 umfasst vier über den Umfang des Statorkerns SK benachbart angeordnete Statorzähne SZ, die drei Statornuten SN mit einem jeweils rechteckigen Querschnitt ausbilden. In den Ausschnitt des Statorkerns SK ist die bereitgestellte Nutisolation NI eingelegt.

Die Nutisolation NI der FIG 2 und 3 ist über die Breite NIB in Segmente G1, G2 mit zwei unterschiedlichen Breiten GB1, GB2 aufgeteilt. Dabei sind erste Segmente G1 mit einer ersten Segmentbreite GB1 jeweils zwischen zwei zweiten Segmenten G2 mit einer zweiten Segmentbreite GB2 bzw. umgekehrt angeordnet. Die erste Segmentbreite GB1 ist abhängig von einer Breite des Statorzahnkopfes SZK bemessen, während die zweite Segmentbreite GB2 abhängig von den Maßen der Statornut SN bemessen ist, wobei die einer jeweiligen Statornut SN zugeordnete Breite der Nutisolation NI derart bemessen ist, dass die eine bzw. die mehreren in die Statornut SN eingebrachten Spulenseiten vollständig von der Nutisolation NI umschlossen werden können.

Erste und zweite Segmente G1, G2 sind jeweils durch eine mittels eines geeigneten Werkzeugs erzeugte Falzlinie FL getrennt, die jeweils als eine sich über die gesamte Länge NIL der Nutisolation NI erstreckende Knickkante ausgestaltet sind, sodass die beiden an eine Falzlinie FL grenzenden Segmente G1, G2 einen Winkel ausbilden. Wie aus der FIG 2 deutlich wird, sind die beiden Falzlinien FL zwischen dem jeweiligen ersten Segment G1 und den zu diesem benachbarten zweiten Segmenten G2 nach dem Einlegen der Nutisolation NI jeweils im Bereich des Übergangs von dem Statorzahnkopf SZK zu einer Nutwand SNW einer Statornut SN angeordnet. Die von der Knickkanten der Falzlinien FL erzeugten Winkel entsprechen jeweils einem nahezu rechten Winkel, wodurch sowohl das erste Segment G1 nahe dem Statorzahnkopf SZK als auch das jeweilige zweite Segment G2, zumindest im radial oberen Bereich der Statornut SN, nahe der Nutwand SNW geführt sind.

Die ersten Segmente G1 weisen jeweils ergänzend eine Perforationslinie PL auf, die sich beispielhaft mittig der Breite GB1 des ersten Segments G1 über die gesamte Länge NIL der Nutisolation NI erstreckt. Eine Perforation des Materials der Nutisolation NI kann beispielsweise mittels eines Lasers oder eines sonstigen geeigneten Schneid- bzw. Perforationswerkzeugs erfolgen und dient einer gezielten Schwächung des Materials der Nutisolation NI, um ein einfaches manuelles oder bevorzugt automatisches Auftrennen der Nutisolation an bestimmten Stellen der Breite NIB der Nutisolation NI zu erzielen. Ergänzend zu über die Länge der Perforationslinie PL verteilt angeordneten und das Material der Nutisolation NI durchdringenden Löchern und/oder Schlitzen können Endbereiche der Länge der Nutisolation NI bereits vollständig aufgetrennt sein, wodurch insbesondere ein verlässliches automatisches Auftrennen erzielt werden kann. Das Vorsehen einer Perforationslinie PL mittig des ersten Segments G1 bzw. des Statorzahnkopfes SZK ist dabei nicht zwingend erforderlich. Alternativ kann die Perforationslinie PL über die Breite GB1 des ersten Segments G1 auch asymmetrisch angeordnet sein, wobei in diesem Fall vorzugsweise alle ersten Segmente eine solche Asymmetrie aufweisen, um eine jeweils ausreichende Breite von durch das Auftrennen entstehenden Segmentenden der Nutisolation NI bereitzustellen, die ein vollständiges Umschließen der Spulenseite bzw. Spulenseiten in der jeweiligen Statornut SN für ein Übereinanderlegen ermöglichen. Ferner können alternativ zu einer einzigen Perforationslinie PL auch mehrere Perforationslinien PL in jedem der ersten Segmente G1 vorgesehen sein, die sich parallel und mit einem bestimmten Abstand zueinander über die Länge NIL der Nutisolation NI erstrecken. Auch kann die Nutisolation NI an den Perforationslinien PL des ersten und letzten ersten Segments G1 bereits vor dem Einlegen der Nutisolation NI in den Statorkern SK aufgetrennt werden, sodass jeweils ein Segmentende zur Verfügung steht, um die benachbarten Statornuten SN, in denen das erste und das letzte zweite Segment G2 der Nutisolation NI eingelegt wird, nach Einbringen der Spulenseite bzw. Spulenseiten verschließen zu können.

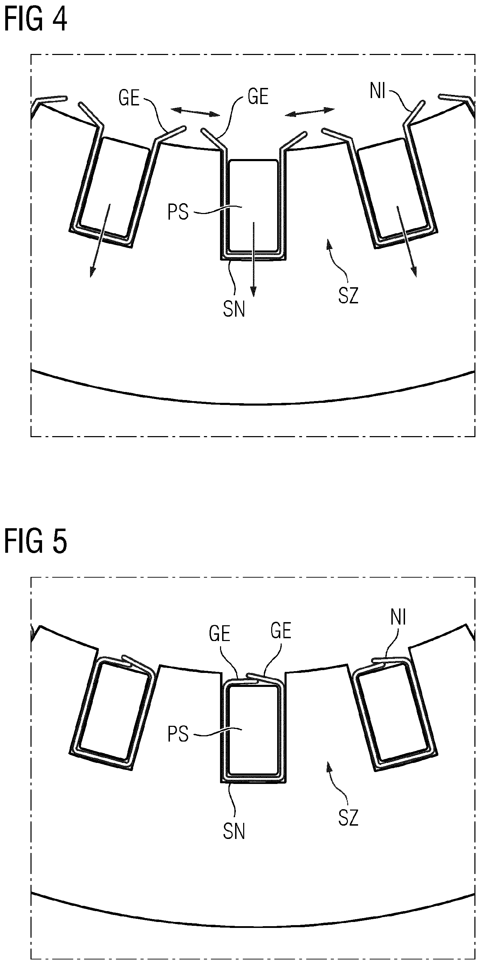

FIG 4 zeigt, basierend auf der Darstellung der FIG 2, einen Zustand der Nutisolation NI nach dem Einbringen von Spulenseiten PS in die Statornuten SN. Für eine vereinfachte Darstellung wird in jeder Statornut SN nur eine Spulenseite PS eingebracht, während insbesondere bei einer verteilten Wicklung hingegen üblicherweise zwei Spulenseiten PS übereinanderliegend in einer jeweiligen Statornut SN eingebracht werden, wobei eine am Nutgrund SNG liegende Spulenseite SN auch als Unterschicht oder Unterstab bezeichnet wird, während eine an der Nutöffnung SNO liegende Spulenseite als Oberschicht oder Oberstab bezeichnet wird. Die Spulenseite PS weist einen nahezu rechteckigen Querschnitt auf, sodass dessen Einbringen in die Statornut SN, dargestellt durch einen in radialer Richtung weisenden Pfeil, bewirkt, dass die zunächst bogenförmig eingelegte Nutisolation NI bzw. deren zweites Segment G2 aufgrund des größeren Umfangs der Spulenseite PS mit in den Nutgrund SNG gezogen wird. Die aufgrund dieses Hineinziehens auf die Perforationslinien PL der auf den benachbarten Statorzahnköpfen SZK angeordneten ersten Segmente G1 wirkende Zugbelastung bewirkt, dass die ersten Segmente G1 der Nutisolation NI entlang der Perforationslinien PL aufgetrennt werden, dargestellt durch die in Umfangrichtung weisenden Pfeile, sodass jeweilige Segmentenden GE gebildet werden. Um eine gleichmäßige Zugbelastung der Perforationslinien PL der Nutisolation NI zu erreichen bzw. eine einseitige Zugbelastung zu vermeiden, werden die Spulenseiten PS vorzugsweise gleichzeitig in die Statornuten SN eingebracht. Dies kann beispielsweise mittels eines Werkzeugs, wie es in den nachveröffentlichten deutschen Patentanmeldungen DE 10 2021 200 839.9, DE 10 2021 200 843.7, DE 10 2021 200 841.0 und DE 10 2021 200 844.5 offenbart ist, erfolgen.

FIG 5 zeigt einen Zustand der Nutisolation NI nach dem Übereinanderlegen der Segmentenden GE über den jeweiligen Spulenseiten PS. Nach dem Auftrennen der ersten Segmente G1 an den Perforationslinien PL werden die gebildeten Segmentenden GE, beispielsweise manuell durch eine Montagefachkraft, im Bereich der Nutöffnung SNO der jeweiligen Statornut SN übereinandergelegt, sodass die Spulenseite PS bzw. die mehreren Spulenseiten in dieser Statornut SN vollständig von der Nutisolation NI umschlossen ist bzw. sind. Ergänzend wird die Statornut SN bzw. die Nutöffnung SNO von einem Nutverschlusselement, beispielsweise einem Nutversschlussstreifen aus einem Glasfasermaterial, abgeschlossen. Ein solches Nutverschlusselement wird in speziellen Nuten der Nutwände SNW im radial oberen Bereich nahe der Nutöffnung SNO der Statornut SN angeordnet und beispielsweise von einer Stirnseite des Statorkerns SK eingeführt. Das Nutverschlusselement dient dabei einer Fixierung der übereinandergelegten Segmentenden GE, welche ansonsten aufgrund der Knickkanten der Falzlinien FL wieder in ihre Ausgangsposition oberhalb der Statorzahnköpfe SZK zurückfedern würden. Weder die Nuten in den Nutwänden SNW noch ein darin geführtes Nutverschlusselement sind in der FIG 5 speziell dargestellt.

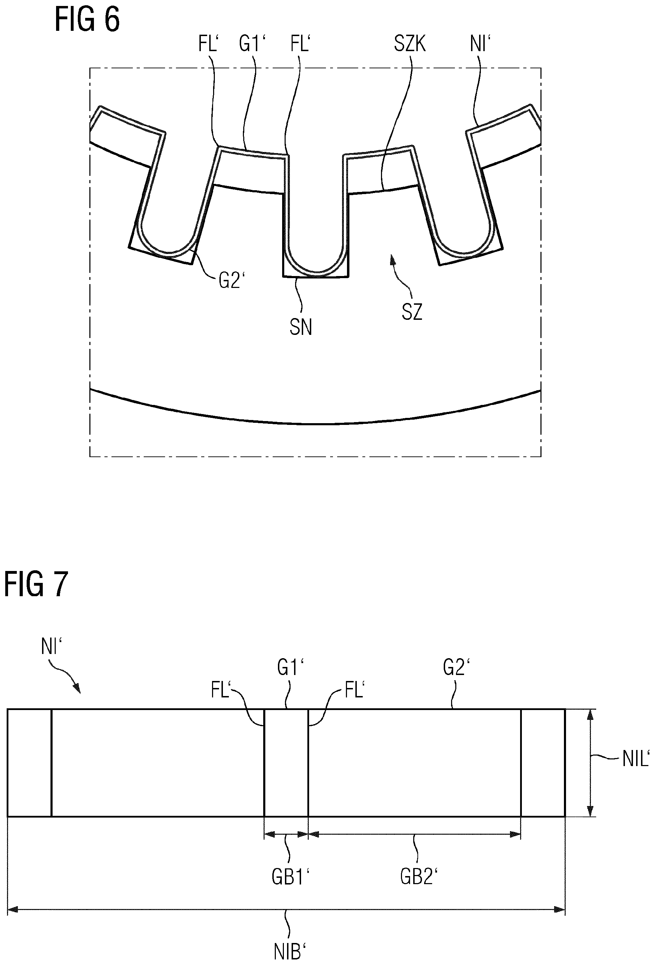

FIG 6 und 7 zeigen schematisch einen Ausschnitt des Querschnitts des Statorkerns SK der FIG 1, in diesem Fall drei Statorzähne SZ und zwei Statornuten SN umfassend, mit einer darin eingelegten bereitgestellten alternativen Nutisolation NI` sowie eine Draufsicht dieser alternativen Nutisolation NI`. Im Vergleich zu den Ausführungsbeispielen der FIG 1 bis 5 weisen die ersten Segmente G1*'* der Nutisolation NI' eine kleinere Breite GB1*'*, die zweiten Segmente G2' hingegen eine größere Breite GB2` auf. Dies führt dazu, dass die ersten Segmente G1*'* nach Einlegen der Nutisolation NI` in die Statornuten SN einen größeren radialen Abstand zu den Statorzahnköpfen SZK aufweisen, während die zweiten Segmente G2' weiter aus den Statornuten SN herausragen. Die kleinere Breite GB1' der ersten Segmente G1*'* bewirkt zudem, dass im eingelegten Zustand der Nutisolation NI' eine ausreichende Breite zwischen den Falzlinien FL' benachbarter erster Segmente G1*'* gewahrt wird, die ein sicheres Einbringen von Spulenseiten PS in die Statornuten SN ermöglicht. Die größere Breite GB2` der zweiten Segmente G2*'* bewirkt hingegen, dass nach dem Einbringen der Spulenseiten PS in die Statornuten SN die ersten Segmente G1*'* weiterhin einen bestimmten radialen Abstand zu den Statorzahnköpfen SZK aufweisen. Dieser Abstand ermöglicht es, die ersten Segmente G1*'* der Nutisolation NI`, beispielsweise mittig und über die gesamte Länge NIL' der Nutisolation NI`, mittels eines geeigneten Schneidwerkzeugs aufzutrennen.

Aufgrund der größeren Breite GB2` der zweiten Segmente G2*'* führt das Einbringen der Spulenseiten PS zu keiner bzw. zu keiner ausreichenden Zugbelastung der ersten Segmente G1*'*, um ein Auftrennen einer in diesen jeweils vorgesehene Perforationslinie zu bewirken. Ein manuelles oder automatisiertes Auftrennen der ersten Segmente G1*'* im Anschluss an das Einbringen der Spulenseiten PS ist daher als weiterer Schritt erforderlich. Es können jedoch weiterhin jeweils eine oder zwei Perforationslinien in den ersten Segmenten G1*'* der Nutisolation NI` entsprechend dem Ausführungsbeispiel der FIG 1 bis 5 vorgesehen werden, welche das Auftrennen der Nutisolation NI` einfacher und verlässlicher gestalten können. Bei einer ausreichenden Breite GB2` der zweiten Segmente G2' können auch die Falzlinien FL` als Perforationslinien ausgestaltet sein, sodass die ersten Segmente G1*'* beispielsweise vollständig aus der Nutisolation NI` herausgetrennt werden.

Nach dem Auftrennen der Nutisolation NI` werden die dadurch gebildeten Segmentenden wiederum radial oberhalb der Spulenseite PS, der Oberschicht bzw. des Oberstabs übereinandergelegt und die Statornut SN im Bereich der Nutöffnung mittels eines Nutverschlusselements verschlossen. Die Segmentenden für eine Statornut SN werden dabei sowohl aus einer jeweiligen Teilbreite der ersten Segmente G1*'* als auch aus Teilbreiten des zweiten Segments G2' gebildet. Alternativ, sofern die ersten Segmente G1*'* vollständig aus der Nutisolation NI` herausgetrennt werden, werden die Segmentenden hingegen vollständig aus der dem zweiten Segment G2' gebildet.

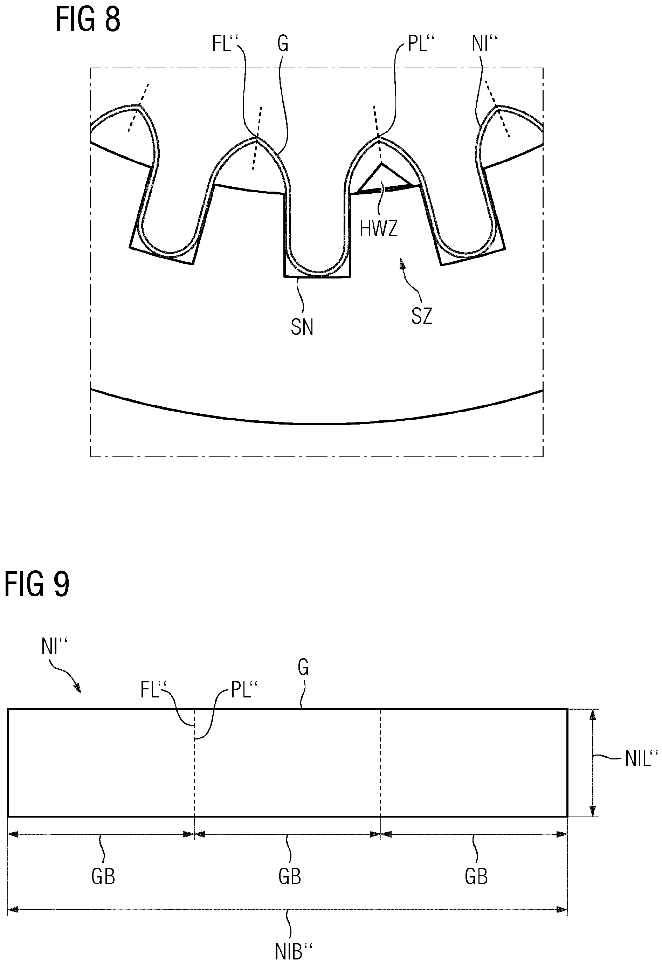

FIG 8 und 9 zeigen schematisch einen Ausschnitt des Querschnitts des Statorkerns SK entsprechend der FIG 2 mit einer darin eingelegten bereitgestellten weiteren alternativen Nutisolation NI" sowie eine Draufsicht dieser weiteren alternativen Nutisolation NI". Die Nutisolation NI" weist ausschließlich Segmente G einheitlicher Breite GB auf, wobei über die Breite NIB" der Nutisolation NI*"* betrachtet benachbarte Segmente G jeweils durch eine Falzlinie FL" voneinander getrennt sind. Die Falzlinien FL*"* sind wiederum als eine sich über die gesamte Länge NIL*"* der Nutisolation NI" erstreckende jeweilige Knickkante ausgestaltet. Ein von der Knickkante der Falzlinie FL*"* erzeugte Winkel kann beispielsweise entsprechend der Darstellung in FIG 8 einem nahezu rechten Winkel oder auch einem eher spitzen Winkel entsprechen. In dem Schritt des Einlegens der Nutisolation NI" in den Statorkern SK werden die Falzlinien FL" jeweils in einem radialen Abstand oberhalb und beispielsweise mittig eines Statorzahnkopfes SZK angeordnet, sodass ausgehend von diesen die an die Falzlinie FL" angrenzenden Segmente G bogenförmig in die benachbarten Statornuten SN eingelegt werden. Durch die Anordnung der Falzlinien FL" radial oberhalb der Statorzahnköpfe SZK wird im eingelegten Zustand der Nutisolation NI" eine ausreichende Breite für ein sicheres Einbringen von Spulenseiten PS in die Statornuten SN bereitgestellt.

Mit dem Einbringen jeweils einer oder mehrerer Spulenseiten PS werden die Segmente G weiter in die Statornuten PS hineingezogen, wodurch der jeweilige radiale Abstand der Falzlinie FL" zu dem Statorzahnkopf SZK verringert wird. Dieser verbleibende Abstand bzw. die diesen Abstand beeinflussende Breite GB der Segmente G wird dabei vorzugsweise derart gewählt, dass die Falzlinien FL" im Anschluss an das Einbringen der Spulenseiten PS mit einem geeigneten Schneidwerkzeug über die gesamte Länge NIL*"* der Nutisolation NI" in einfacher und verlässlicher Weise aufgetrennt werden können.

Ergänzend können die Falzlinien FL" nach der Darstellung in FIG 8 und 9 als Perforationslinien PL" ausgestaltet sein, welche vorzugsweise entsprechend den Perforationslinien PL des Ausführungsbeispiels der FIG 1 bis 5 ausgestaltet sind. Zusammen mit einem geeigneten Bemessen der Breite GB der Segmente G führt das Einbringen der Spulenseiten PS in die Statornuten SN aufgrund der wirkenden Zugbelastung zu einem Auftrennen der Perforationslinien PL", sodass der gesonderter Schritt des manuellen oder automatisierten Auftrennens der Falzlinien FL" nicht erforderlich ist. Entsprechend den vorstehenden Ausführungsbeispielen werden die durch das Auftrennen gebildeten Segmentenden der Segmente G anschließend in den Statornuten SN übereinandergelegt und die Statornuten SN mittels eines Nutverschlusselements verschlossen.

Sofern die Breite GB der Segmente G nicht derart bemessen werden kann, dass ein ausreichendes Überlappen der Segmentenden gewährleistet ist, kann die Breite GB auch größer bemessen werden und die Statorzahnköpfe SZK vor oder nach dem Einlegen der Nutisolation NI" mit einem jeweiligen Hilfswerkzeug HWZ versehen werden, wie es beispielhaft in FIG 8 dargestellt ist. Ein solches Hilfswerkzeug HWZ ist beispielsweise ein Stab aus einem Metall oder Kunststoff mit einem dreieckigen Querschnitt und einer weitgehend der Länge NIL" entsprechenden Länge, welcher jeweils mittig eine Statorzahnkopfes SZK angeordnet bzw. an diesem lösbar befestigt wird. Das Hilfswerkzeug HWZ bewirkt eine Verkürzung des radialen Abstands der Perforationslinie PL" zu dem Statorzahnkopf SZK, wobei die Knickkante des Perforationslinie PL" der Spitze des Hilfswerkzeugs HWZ radial gegenüberliegend angeordnet sein sollte. Nach dem Einbringen der Spulenseiten PS und dem erfolgten Auftrennen der Perforationslinien PL*"* mithilfe der Hilfswerkzeuge HWZ werden diese wieder von den Statorzahnköpfen SZK entfernt.

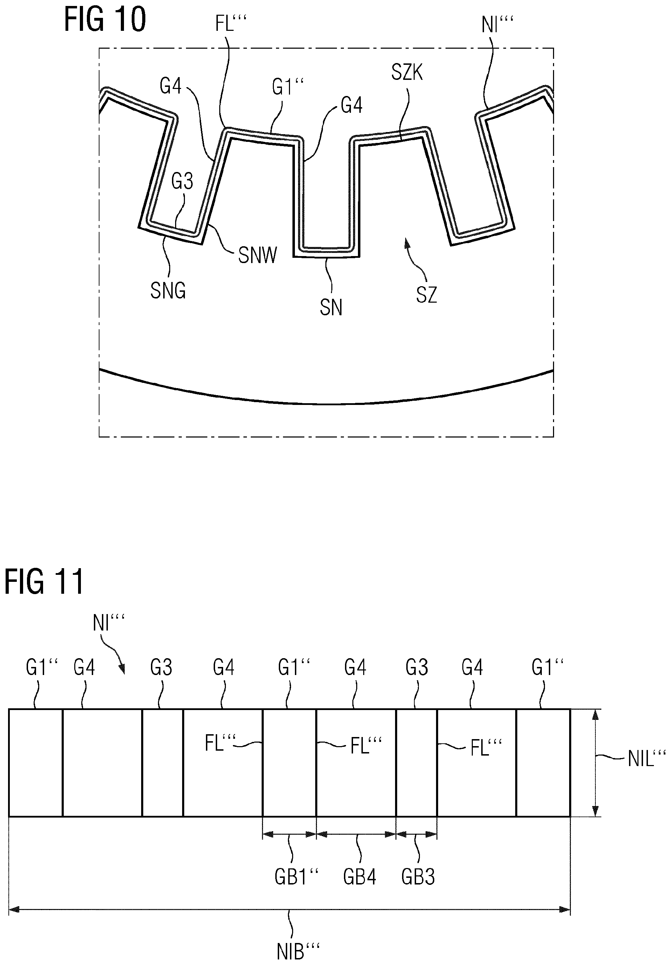

FIG 10 und 11 zeigen schematisch einen Ausschnitt des Querschnitts des Statorkerns SK der FIG 1 mit, ähnlich dem Ausführungsbeispiel der FIG 6 und 7, drei Statorzähnen SZ, zwei Statornuten SN und einer darin eingelegten bereitgestellten weiteren alternativen Nutisolation NI‴, sowie eine Draufsicht dieser weiteren alternativen Nutisolation NI‴. Die Nutisolation NI‴ ist über die Breite NIB‴ in eine Abfolge von drei Segmenten GI*"*, G3 und G4 aufgeteilt, wobei die Segmentbreite GB1*"* der ersten Segmente G1*"* der Segmentbreite GB1 der ersten Segmente G1 des Ausführungsbeispiels der FIG 1 bis 5 entspricht und an die Breite des Statorzahnkopfes SZK angepasst ist. Im Vergleich zu dem Ausführungsbeispiel der FIG 1 bis 5 sind die Segmente zwischen jeweils zwei ersten Segmenten G1*"* hingegen in drei Segmente aufgeteilt, wobei zwei zweite Segmente G4 jeweils eine Segmentbreite GB4 aufweisen, die an die Höhe der Nutwand SNW der Statornut SN angepasst ist, und ein drittes Segment G3 eine Segmentbreite GB3 aufweist, die an die Breite des Nutgrunds SNG angepasst ist. Über die Breite NIB‴ der Nutisolation NI‴ betrachtet sind die zweiten Segmente G4 somit jeweils zwischen einem ersten Segment G1*"* und einem dritten Segment G3 angeordnet. Die Segmente sind wiederum durch eine jeweilige Falzlinie FL‴ getrennt, wobei ein durch deren Knickkante erzeugter Winkel, beispielweise ein rechter bzw. nahezu rechter Winkel, entsprechend der Lage der Falzlinie FL‴ an dem Übergang von dem Statorzahnkopf SZK zur Nutwand SNW oder an dem Übergang von dem Nutgrund SNG zur Nutwand SNW ausgerichtet ist. Durch die Bemessung der einzelnen Segmente G1*"*, G3, G4 und die Ausrichtung der Knickkanten der Falzlinien FL‴ wird eine Struktur der Nutisolation NI‴ erzielt, die sich nach dem Einlegen in den Statorkern SK dessen Querschnitt bzw. dem Profil der Statorzähne SZ und Statornuten SN weitgehend anpasst.

Im Anschluss an das Einbringen der Spulenseiten PS in die Statornuten SN werden die ersten Segmente G1*"* wiederum mit einem geeigneten Schneidwerkzeug über die gesamte Länge NIL‴ der Nutisolation NI‴ aufgetrennt, die entstehenden Nutenden radial oberhalb der Spulenseiten PS übereinandergelegt und die Statornuten SN mittels eines Nutverschlusselements verschlossen. Insbesondere um das Auftrennen zu erleichtern, kann beispielsweise mittig der ersten Segmente G1*"* eine jeweilige Perforationslinie vorgesehen werden, welche in der FIG 11 jedoch nicht speziell dargestellt sind.

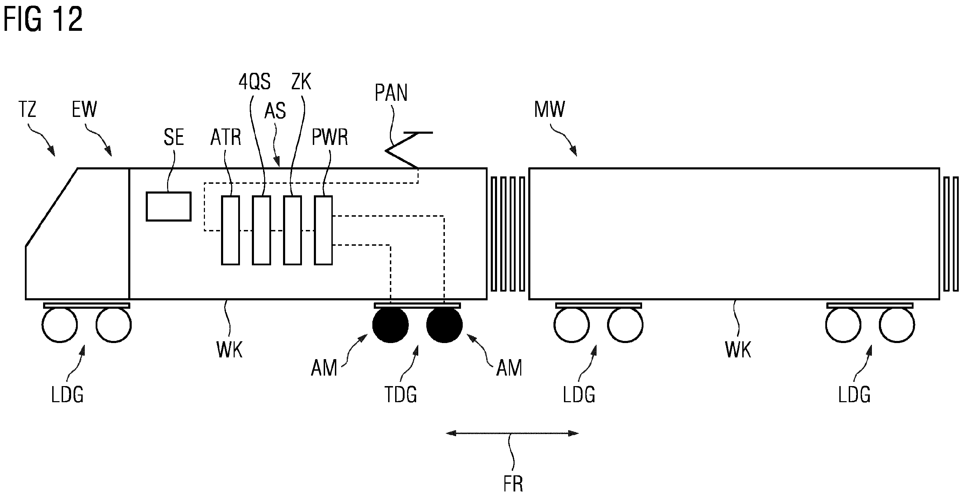

FIG 12 zeigt schematisch ein Schienenfahrzeug TZ in einer Seitenansicht. Das Schienenfahrzeug TZ ist beispielhaftes als ein Triebzug mit einer Mehrzahl Wagen ausgestaltet. Triebzüge werden üblicherweise für die Personenbeförderung im Nah-, Regional- und Fernverkehr eingesetzt. Das Schienenfahrzeug TZ kann jedoch in gleicher Weise als eine für die Personenbeförderung oder für den Gütertransport eingesetzte Lokomotive ausgestaltet sein. Von dem beispielhaften Triebzug TZ der FIG 1 sind lediglich ein Endwagen EW sowie ein mit diesem gekoppelter Mittelwagen MW dargestellt. Beide Wagen EW, MW verfügen über einen jeweiligen Wagenkasten WK, der sich über Drehgestelle in Form eines Triebdrehgestells TDG mit darin angeordneten Antriebsmotoren AM bzw. Laufdrehgestellen LDG ohne Antriebsmotoren auf nicht dargestellten Schienen eines Gleises abstützt. Das Schienenfahrzeug TZ bewegt sich auf den Schienen in den durch das Gleis vorgegebenen Fahrtrichtungen FR.

In dem Endwagen EW sind schematisch Komponenten eines elektrischen Antriebssystems AS eines an einem Wechselstrom-Versorgungsnetz betriebenen Schienenfahrzeugs TZ angegeben. Diese Komponenten sind üblicherweise in speziellen Bereichen innerhalb des Wagenkastens WK, im Unterflurbereich, im Dachbereich oder auch verteilt über mehrere Wagen des Schienenfahrzeugs TZ angeordnet. Weitere Komponenten des Antriebssystems AS, insbesondere für den Betrieb der Komponenten erforderliche Hilfsbetriebe, sind ebenfalls vorgesehen, in der FIG 12 jedoch nicht speziell dargestellt.

Über einen beispielhaft im Dachbereich des Endwagens EW angeordneten Stromabnehmer PAN ist das Antriebssystem AS mit einer nicht dargestellten Oberleitung des Wechselstrom-Versorgungsnetzes elektrisch verbindbar, wobei die Oberleitung beispielsweise einen Einphasenwechselstrom mit einem Spannungsniveau von beispielsweise 15kV, 16,7Hz oder 25kV, 50Hz führt. Der Wechselstrom wird einer netzseitigen Primärwicklung eines Antriebstransformators ATR zugeführt, in welchem das netzseitige Spannungsniveau auf ein niedrigeres Spannungsniveau transformiert wird. Eine Sekundärwicklung des Antriebstransformators ATR ist mit einem netzseitigen Stromrichter, typischerweise einem Vierquadrantensteller 4QS, für eine Gleichrichtung des netzseitigen Wechselstroms verbunden.

Der netzseitige Stromrichter speist einen Gleichspannungszwischenkreis ZK, welcher wiederum einen lastseitigen Stromrichter, typischerweise einen Pulswechselrichter PWR, speist. In dem Gleichspannungszwischenkreis ZK sind ein oder mehrere Zwischenkreiskondensatoren angeordnet, welche als elektrische Energiespeicher insbesondere einer Glättung der Gleichspannung dienen. Der lastseitige Stromrichter PWR generiert aus der Gleichspannung des Gleichspannungszwischenkreises ZK eine Dreiphasenwechselspannung variabler Frequenz und Amplitude, mit welcher die Statorwicklungen von beispielhaft zwei in dem Triebdrehgestell TDG des Endwagens EW angeordneten Antriebsmotoren AM gespeist werden. Die Antriebsmotoren AM können als Asynchron- oder Synchron-Drehstrommaschinen ausgestaltet sein, wobei Synchron-Drehstrommaschinen individuell von einem jeweiligen lastseitigen Stromrichter gespeist werden. Gesteuert wird die Funktion der Stromrichter von einer Steuereinrichtung SE. Ein Antriebsmotor AM eines solchen Schienenfahrzeugs TZ kann einen erfindungsgemäß hergestellten Stator aufweisen und/oder eine erfindungsgemäße Nutisolation NI umfassen oder verwenden.

### Bezugszeichenliste

- 4QS: Vierquadrantensteller, netzseitiger Stromrichter
- AM: Antriebsmotor
- AS: Antriebssystem
- ATR: Antriebstransformator
- EW: Endwagen
- FL, FL', FL", FL‴ FR: Falzlinie Fahrtrichtung
- G, G1, G1*'*, G1", G2, G2', G3, G4: Segment Nutisolation
- GB, GB1, GB1', GB1", GB2, GB2', GB3, GB4: Segmentbreite Nutisolation
- GE: Segmentende Nutisolation
- LDG: Laufdrehgestell
- MW: Mittelwagen
- NI, NI', NI", NI''': Nutisolation
- NIB, NIB', NIB", NIB‴: Breite Nutisolation
- NIL, NIL', NIL", NIL‴: Länge Nutisolation
- PAN: Stromabnehmer
- PL, PL": Perforationslinie
- PWR: Pulswechselrichter, lastseitiger Stromrichter
- S: Stator
- SE: Steuereinrichtung
- SI: Statorinnenraum
- SK: Statorkern
- SN: Statornut
- SNG: Nutgrund Statornut
- SNO: Nutöffnung Statornut
- SNW: Nutwand Statornut
- SZ: Statorzahn
- SZK: Statorzahnkopf
- TDG: Triebdrehgestell
- TZ: Schienenfahrzeug
- WK: Wagenkasten
- ZK: Gleichspannungszwischenkreis

## Patentansprüche

1. Verfahren zum Herstellen eines Stators (S) einer elektrischen rotierenden Maschine (AM),
mit zumindest den Schritten:
- Bereitstellen eines ringförmigen Statorkerns (SK), wobei der Statorkern (SK) an seiner radialen Innenseite eine Mehrzahl Statorzähne (SZ) aufweist, welche eine entsprechende Mehrzahl Statornuten (SN) ausbilden, wobei Nutöffnungen (SNO) der Statornuten (SN) und Statorzahnköpfe (SZK) der Statorzähne (SZ) einen kreiszylindrischen Statorinnenraum (SI) begrenzen, in welchem ein um eine Rotationsachse drehender Rotor der Maschine anordenbar ist, und wobei die Statornuten (SN) jeweils einen rechteckigen Querschnitt mit einem Nutgrund (SNG), parallelen Nutwänden (SNW) und einer Nutöffnung (SNO) zum Statorinnenraum (SI) aufweisen,
- Bereitstellen zumindest einer Nutisolation (NI, NI`, NI*"*, NI‴), wobei die Nutisolation (NI, NI', NI". NI‴) eine Länge (NIL, NIL*'*, NIL", NIL‴) in axialer Richtung aufweist, welche zumindest einer Länge der Statornuten (SN) entspricht, und eine Breite (NIB, NIB', NIB", NIB‴) in Umfangrichtung des Statorkerns (SK) aufweist, welche eine Mehrzahl Statornuten (SN) umfasst, und wobei die Nutisolation (NI, NI', NI", NI‴) in eine Mehrzahl Segmente (G, G1, G1*'*, G2, G2', G3, G4) mit einer jeweiligen Segmentbreite (GB, GB1, GB1*'* GB2, GB2', GB3, GB4) unterteilt ist, wobei benachbarte Segmente durch eine jeweilige Falzlinie (FL, FL', FL*"*, FL‴) getrennt sind,
- Einlegen der Nutisolation (NI, NI`, NI", NI‴) in den Statorkern (SK),
- Einbringen von Spulenseiten (PS) von Formspulen zumindest einer Statorwicklung über die Nutöffnungen (SNO) in die Statornuten (SN),
- Auftrennen von Segmenten (G, G1, G1*'*) und Übereinanderlegen von Segmentenden (GE) im Bereich der jeweiligen Nutöffnung (SNO) .

2. Verfahren nach Anspruch 1, wobei
die Segmente (G) eine jeweils gleiche Segmentbreite (GB) aufweisen und die Falzlinien (FL") in dem Schritt des Einlegens der Nutisolation (NI") jeweils im Bereich eines Statorzahnkopfes (SZK) angeordnet werden.

3. Verfahren nach Anspruch 2, wobei
die Falzlinien (FL") mit einer jeweiligen Perforationslinie (PL*"*) über zumindest eine Teillänge der Nutisolation (NI*"*) versehen sind, sodass die Nutisolation (NI") in dem oder im Anschluss an den Schritt des Einbringens der Spulenseiten (PS) jeweils im Bereich der Perforationslinie (PL*"*) aufgetrennt wird.

4. Verfahren nach Anspruch 1, wobei
die Segmente (G1, G2) alternativ eine erste oder eine zweite Segmentbreite (GB1, GB2) aufweisen, wobei die erste Segmentbreite (GB1) abhängig von einer Breite des Statorzahnkopfes (SZK) bemessen ist, wobei erste Segmente (G1) und zweite Segmente (G2) abwechselnd angeordnet sind, wobei die ersten Segmente (G1) in dem Schritt des Einlegens der Nutisolation (NI) jeweils im Bereich eines Statorzahnkopfes (SZK) angeordnet werden, und wobei die Falzlinien (FL) jeweils im Bereich eines Übergangs von dem Statorzahnkopf (FZK) zu der Nutwand (SNW) angeordnet werden.

5. Verfahren nach Anspruch 4, wobei
die ersten Segmente (G1) jeweils mit einer Perforationslinie (PL) über zumindest eine Teillänge der Nutisolation (NI) versehen sind, sodass die Nutisolation (NI) in dem oder im Anschluss an den Schritt des Einbringens der Spulenseiten (PS) jeweils im Bereich der Perforationslinie (PL) aufgetrennt wird.

6. Verfahren nach Anspruch 1, wobei
die Segmente alternativ eine erste (G1*"*), eine zweite (G4) oder eine dritte Segmentbreite (G3) aufweisen, wobei die erste Segmentbreite (GB1*"*) abhängig von einer Breite des Statorzahnkopfes (SZK), die zweite Segmentbreite (GB4) abhängig von einer Höhe der Nutwand (SNW) und die dritte Segmentbreite (GB3) abhängig von einer Breite des Nutgrunds (SNG) bemessen sind, wobei dritte Segmente (G3) und erste Segmente (G1*"*) jeweils zwischen zwei zweiten Segmenten (G4) angeordnet sind, und wobei in dem Schritt des Einlegens der Nutisolation (NI‴) die Falzlinien (FL‴) zwischen den ersten (G1*"*) und zweiten Segmenten (G4) jeweils im Bereich eines Übergangs von dem Statorzahnkopf (SZK) zu der Nutwand (SNW) und weitere Falzlinien (FL‴) zwischen dritten (G3) und zweiten Segmenten (G4) jeweils im Bereich eines Übergangs von dem Nutgrund (SNG) zu der Nutwand (SNW) angeordnet werden.

7. Nutisolation (NI, NI', NI', NI", NI‴) für einen Statorkern (SK) eines Stators (S) einer elektrischen rotierenden Maschine,
wobei der Statorkern (SK) an seiner radialen Innenseite eine Mehrzahl Statorzähne (SZ) aufweist, welche eine entsprechende Mehrzahl Statornuten (SN) ausbilden, wobei Nutöffnungen (SNO) der Statornuten (SN) und Statorzahnköpfe (SZK) der Statorzähne (SZ) einen kreiszylindrischen Statorinnenraum (SI) begrenzen, und wobei die Statornuten (SN) jeweils einen rechteckigen Querschnitt mit einem Nutgrund (SNG), parallelen Nutwänden (SNW) und einer Nutöffnung (SNO) zum Statorinnenraum (SI) aufweisen,
und wobei die Nutisolation (NI, NI', NI', NI", NI‴)
- eine Länge (NIL, NIL', NIL", NIL‴) in axialer Richtung, welche zumindest einer Länge der Statornuten (SN) des ringförmigen Statorkerns (SK) entspricht, und eine Breite (NIB, NIB', NIB'', NIB‴), welche eine Mehrzahl Statornuten (SN) umfasst, aufweist, und
- in eine Mehrzahl Segmente (G, G1, G1*'*, G1*"*, G2, G2', G3, G4) mit einer jeweiligen Segmentbreite unterteilt ist, wobei benachbarte Segmente durch eine jeweilige Falzlinie (FL, FL*'*, FL", FL‴) getrennt sind.

8. Nutisolation (NI, NI', NI', NI", NI‴) nach Anspruch 7, wobei die Falzlinien (FL, FL', FL'', FL''') derart angeordnet sind, dass
- die Segmente (G) eine jeweils gleiche Segmentbreite (GB) aufweisen, oder
- die Segmente (G1, G1*'*, G2, G2`) alternativ eine erste (GB1, GB1') oder eine zweite Segmentbreite (GB2, GB2') aufweisen, wobei die erste Segmentbreite (GB1, GB1') abhängig von einer Breite des Statorzahnkopfes (SZK) bemessen ist, wobei erste Segmente (G1, G1*'*) und zweite Segmente (G2, G2`) abwechselnd angeordnet sind, oder
- die Segmente (G1*"*, G3, G4) alternativ eine erste (GB1*"*), eine zweite (GB4) oder eine dritte Segmentbreite (GB3) aufweisen, wobei die erste Segmentbreite (GB1*"*) abhängig von einer Breite des Statorzahnkopfes (SZK), die zweite Segmentbreite (GB4) abhängig von einer Höhe der Nutwand (SNW) und die dritte Segmentbreite (GB3) abhängig von einer Breite des Nutgrunds (SNG) bemessen sind, und wobei dritte Segmente (G3) und erste Segmente (G1*"*) jeweils zwischen zwei zweiten Segmenten (G4) angeordnet sind.

9. Verwendung einer Nutisolation (NI, NI', NI', NI", NI‴) nach Anspruch 7 oder 8 für die Herstellung eines Stators (S) einer elektrischen rotierenden Maschine, insbesondere eines Antriebsmotors (AM) eines Schienenfahrzeugs (TZ).

10. Elektrische rotierende Maschine, wobei
- die Maschine zumindest einen Stator (S) und einen Rotor umfasst, wobei ein ringförmiger Statorkern (SK) des Stators (S) an seiner radialen Innenseite eine Mehrzahl Statorzähne (SZ) aufweist, welche eine entsprechende Mehrzahl Statornuten (SN) ausbilden, wobei Nutöffnungen (SNO) der Statornuten (SN) und Statorzahnköpfe (SZK) der Statorzähne (SZ) einen kreiszylindrischen Statorinnenraum (SI) begrenzen, in welchem der um eine Rotationsachse drehende Rotor angeordnet ist, und wobei die Statornuten (SN) jeweils einen rechteckigen Querschnitt mit einem Nutgrund (SNG), parallelen Nutwänden (SNW) und einer Nutöffnung (SNO) zum Statorinnenraum (SI) aufweisen, und
- der Stator (S) nach einem Verfahren nach einem der Ansprüche 1 bis 6 hergestellt wurde.

11. Elektrische rotierende Maschine nach Anspruch 10, wobei die Maschine als ein Antriebsmotor (AM) eines Schienenfahrzeugs (TZ), insbesondere mit einer Nennleistung zwischen 100 kW und 1500 kW, ausgestaltet ist.
